(19)

Europäisches
Patentamt
European
Patent Office
Office européen
des brevets

(11) **EP 2 592 896 A1**

(12) **EUROPEAN PATENT APPLICATION**

(43) Date of publication:
**15.05.2013 Bulletin 2013/20**

(51) Int Cl.:
*H04W 88/08* (2009.01)   *H04B 7/00* (2006.01)

(21) Application number: **12191537.5**

(22) Date of filing: **07.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.11.2011 IT MI20112030**

(71) Applicant: **Linkra S.r.l.**
**20863 Concorezzo (IT)**

(72) Inventors:
• **Salerno, Marcello**
**20863 Concorezzo (MB) (IT)**
• **Di Bacco, Antonio**
**20863 Concorezzo (MB) (IT)**
• **Beretta, Tiziano**
**20863 CONCOREZZO (MB) (IT)**

(74) Representative: **Colombo, Stefano Paolo et al**
**MARCHI & PARTNERS S.r.l.**
**Via G.B. Pirelli, 19**
**20124 Milano (IT)**

(54) **Radio transceiving system with high-speed data exchange**

(57)     A radio transceiving system for a node of a radio communication network is described, said system comprising a first outdoor unit, a second outdoor unit and a cable which connects the first outdoor unit and the second outdoor unit. In the transceiving system, the first outdoor unit comprises a serializer adapted to process information in a parallel format, so as to generate a flow of serial data, and to transmit the serial data flow to the second outdoor unit via the cable. Moreover, the second outdoor unit comprises a deserializer adapted to receive the serial data flow from the first outdoor unit via the cable and to process the serial data flow so as to recover the information in the parallel format.

Figure 1

EP 2 592 896 A1

**Description**

The present invention relates to the field of radio communication networks. In particular, the present invention relates to a radio transceiving system with high-speed data exchange, in an outdoor, so-called "co-channel dual polarization" configuration.

A radio communication network typically comprises a plurality of nodes connected by means of radio links. In the continuation of the present description, the expression "radio link" is understood as meaning a point-to-point radiofrequency connection between two nodes of a radio communication network. For example, in a GSM radio access network, the base stations (or BTS, "Base Transceiver Stations") are typically connected together or to the respective controllers (or BSC, "Base Station Controllers") by means of dedicated radio links.

Typically, the radio links of the GSM access network transport voice and data traffic in digital format organized in TDM ("Time Division Multiplexing") frames. In the latest generation access networks, for example the LTE ("Long Term Evolution") access networks, the traffic is instead transported in the form of packets, for example Ethernet packets. With this solution it is possible to satisfy the growing demand for services which require a high transmission capacity (e.g. access to the Internet, video-on-demand, IPTV, etc.).

Each node of a radio communication network typically comprises one or more radio transceiving systems. A radio transceiving system in turn typically comprises an indoor unit, an outdoor unit and an antenna.

During transmission, the indoor unit is configured to receive voice and/or data traffic, for example from co-located base stations or from other remote nodes of the communication network. The voice and/or data traffic is received typically in the form of a baseband digital signal, or a bit sequence. The indoor unit may comprise a modulator suitable for modulating an intermediate frequency carrier with the baseband digital signal. The intermediate frequency may be a few tens or hundreds of MHz. A typical digital modulation format used is the digital quadrature amplitude modulation or QAM. The signal thus obtained is then transmitted to the outdoor unit. The outdoor unit typically converts the intermediate frequency signal into a radio signal, namely into a signal with a carrier frequency in the microwave range (3 GHz - 300 GHz) and amplifies this signal for transmission thereof in the air, by means of the antenna.

During reception, the antenna receives the radio signal and forwards it to the outdoor unit which typically converts the radio signal into an intermediate frequency signal. The outdoor unit transmits this signal to the indoor unit. The indoor unit typically comprises a demodulator which performs demodulation of the intermediate frequency signal and recovers the baseband voce and/or data traffic.

Alternatively, a radio transceiving system may comprise only an outdoor unit and an antenna. In this case, the configuration of the radio transceiving system is called "full outdoor". In a full outdoor radio transceiving system, the outdoor unit comprises all the functions described above.

It is known to increase the capacity of a radio link by transmitting two radio signals with the same carrier frequency, but different polarization ("co-channel dual polarization"). Typically, two radio signals with orthogonal polarizations are transmitted, namely a first radio signal with vertical polarization (indicated below as "vertical radio signal") and a second radio signal with horizontal polarization (indicated below as "horizontal radio signal"). The two radio signals are propagated independently on the same radio link. Despite the fact that their polarizations are orthogonal, the two radio signals may interfere, for example owing to the linear distortions introduced by the transmission means (which may be due, for example, to adverse atmospheric propagation conditions) which have the effect of "depolarizing" the two signals, reducing the orthogonal nature of their polarizations.

The interference between the two radio signals, or "cross-polar" interference, may be eliminated using the so-called XPIC ("Cross-Polarization Interference Cancellation") technique. According to this technique, the radio transceiving system comprises a dual polarized antenna able to receive both the vertical and horizontal radio signals and the outdoor unit comprises two demodulators for demodulating separately the two radio signals. Once the two baseband signals are obtained, they are exchanged between the two demodulators. Then, a "reply" of the baseband signal obtained by demodulating the horizontal radio signal is subtracted from the baseband signal obtained by demodulating the vertical radio signal. In an entirely similar manner, the interference of the vertical radio signal on the horizontal radio signal is cancelled.

In the case of "full outdoor", two outdoor units connected to the same dual polarized antenna are used. In this case, a first outdoor unit comprises a demodulator for receiving and subsequently processing the vertical radio signal, while a second outdoor unit comprises a demodulator for receiving and subsequent processing of the horizontal radio signal.

In both cases, the two demodulators exchange the baseband signals obtained by demodulating the vertical and horizontal radio signals in order to perform cancellation of the cross-polar interference.

At the output of the demodulators, the baseband signals are present in the form of digital signals in a parallel format. The number of parallel bits output from the single demodulator depends on the type of digital modulation used. For example, for 1024-QAM modulation, this number may be equal to 8-12 bits for the in-phase component I and 8-12 bits for the quadrature component Q.

In the case where the XPIC technique is implemented within an indoor unit, the two demodulators exchange the digital signals in parallel format via the parallel connections which are typically made by means of the backplane board of the indoor unit.

In the case of full outdoor, the exchange of digital data in parallel format between the two demodulators could be performed using a number of parallel connections (for example using coaxial cables) equal to the number of bits which must be transmitted in parallel. In this case, if each modem generates at its output 24 bits in parallel (12 for the in-phase component I and 12 for the quadrature component Q), 48 parallel connections must be provided.

The Applicant has noted that this solution could be complex and costly, in view of the large number of parallel connections (in particular connections with a high degree of shielding in order to avoid interference) which must be provided between the two outdoor units of a radio transceiving system.

Therefore, the object of the present invention is to provide a radio transceiving system for a node of a radio communication network, said system having a full outdoor configuration in which the two outdoor units may exchange data at high speed in a simple and low-cost manner.

According to a first aspect of the invention, a radio transceiving system for a node of a radio communication network is provided, said system comprising a first outdoor unit, a second outdoor unit and a cable which connects the first outdoor unit and the second outdoor unit, wherein:

- the first outdoor unit comprises a serializer adapted to process information in a parallel format, so as to generate a serial data flow, and to transmit the serial data flow to the second outdoor unit via the cable; and
- the second outdoor unit comprises a deserializer adapted to receive the serial data flow from the first outdoor unit via the cable and to process the serial data flow so as to recover the information in the parallel format.

Preferably, the cable is a copper twisted pair cable comprising a number of twisted pairs higher than 1.

Preferably, the cable is an Ethernet cable of category CAT 6 or CAT 6a.

Preferably, the serial data flow comprises at least one alignment word.

Preferably, in the transceiving system:

- the first outdoor unit is configured to receive a first radio signal and to generate the information in the parallel format, the information being indicative of the first radio signal; and
- the second outdoor unit is configured to receive a second radio signal and to process the second radio signal on the basis of the information recovered in the parallel format.

Preferably, the second outdoor unit is configured to generate further information indicative of the second radio signal, the further information being in the parallel format, the second outdoor unit comprising a further serializer adapted to process the further information so as to generate a further serial data flow and to transmit the further serial data flow to the first outdoor unit via the cable.

Preferably, the serial data flow and the further serial data flow are asynchronous.

Preferably, the first outdoor unit and the second outdoor unit are located at a mutual distance of between 0.5 m and 2 m, the first outdoor unit and the second outdoor unit being connected to a same dual polarized antenna.

Preferably, the first outdoor unit and the second outdoor unit are located at a mutual distance of between 2 m and 10 m, each of the first outdoor unit and the second outdoor unit being connected to a respective single polarized or dual polarized antenna.

The present invention will emerge more clearly from the following detailed description, provided by way of a non-limiting example, to be read with reference to the accompanying drawings in which:

- Figure 1 is a block diagram of a radio transceiving system, according to a first embodiment of the present invention;
- Figure 2 is a block diagram, in greater detail, of the receivers included in the system according to Figure 1;
- Figures 3a and 3b illustrate schematically operation of a serializer included in one of the receivers according to Figure 2;
- Figure 4 is a block diagram of a radio transceiving system, according to a second embodiment of the present invention;
- Figure 5 is a block diagram, in greater detail, of the receivers included in the system according to Figure 4;

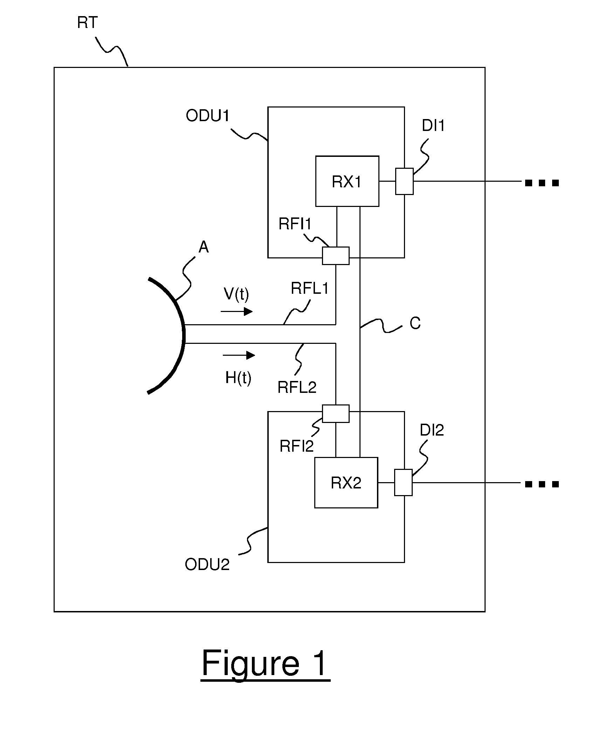

Figure 1 shows a block diagram of a radio transceiving system RT for a node of a radio communication network according to a first embodiment of the present invention.

The transceiving system RT preferably has a full outdoor configuration. In particular, the transceiving system RT comprises an antenna A, a first outdoor unit ODU1 and a second outdoor unit ODU2.

Preferably, the antenna A is a dual polarized antenna, namely an antenna configured to receive radio signals having two different polarizations. Below it will be assumed, by way of a non-limiting example, that the antenna A is configured to receive two radio signals, the respective polarizations of which are orthogonal, namely: a vertical radio signal V(t) with a vertical polarization and a horizontal radio signal H(t) with a horizontal polarization.

The first outdoor unit ODU1 preferably comprises a radio interface RFI1, a receiver RX1 and a data interface DI1. Similarly, the second outdoor unit ODU2 comprises a radio interface RFI2, a receiver RX2 and a data interface DI2. Both the first outdoor unit ODU1 and the second outdoor unit ODU2 comprise further modules and devices, not shown in the Figure, which will not be described below since they are not relevant for the purposes of the present invention. For example, the transmission part of the outdoor units is not shown or described.

The first outdoor unit ODU1 is connected to the antenna A by means of a first connection RFL1, while the second outdoor unit ODU2 is connected to the antenna A by means of a second connection RFL2. Preferably, the first connection RFL1 and the second connection RFL2 comprise waveguides.

Moreover, the receiver RX1 of the first outdoor unit ODU1 and the receiver RX2 of the second outdoor unit ODU2 are connected together by means of a cable C. The first outdoor unit ODU1 and the second outdoor unit ODU2 are preferably located at a mutual distance of between 0.5 m and 2 m. The length of the cable C is therefore preferably between 0.5 m and 2 m.

According to a preferred embodiment of the present invention, the cable C is a copper twisted pair cable comprising a number of twisted pairs higher than 1. Preferably, the cable C comprises a number of twisted pairs equal to 4. More preferably, the cable C is an Ethernet cable of category CAT 6 or CAT 6a.

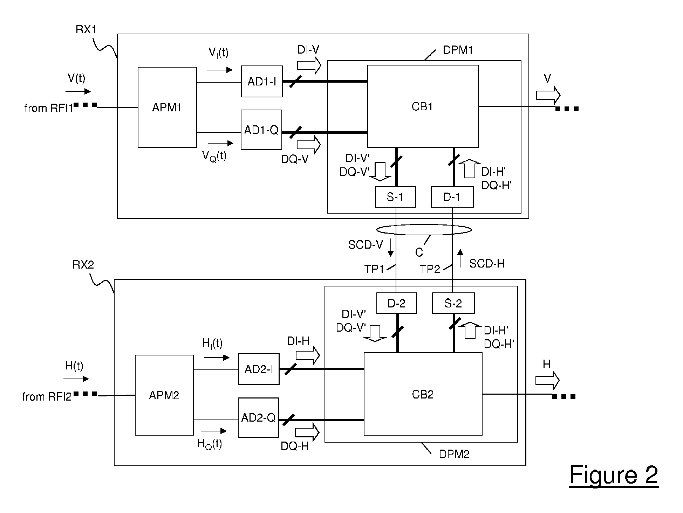

Figure 2 shows a block diagram, in greater detail, of the receivers RX1, RX2. The receiver RX1 comprises an analog processing module APM1, two analog-digital converters AD1-I, AD1-Q and a digital processing module DPM1.

In turn, the digital processing module DPM1 comprises a cancellation block CB1, a serializer S-1 and a deserializer D-1. The serializer S-1 and the deserializer D-1 preferably are contained in a single serializer/deserializer device (in short called "serdes"). Alternatively, the serializer S-1 and the deserializer D-1 may each comprise a serializer/deserializer device. In this case, the two serdes are preferably identical to each other and in each of them however only one of the two functions available (namely serialization and deserialization) is used.

The cancellation block CB1 has two inputs which substantially coincide with the inputs of the module DPM1 and an output which substantially coincides with the output of the module DPM1. The cancellation block CB1 has a further output connected to the serializer S-1 and a further input connected to the deserializer D-1. Preferably, the digital processing module DPM1 is an integrated component of the FPGA ("Field Programmable Gate Array") type or ASIC ("Application Specific Integrated Circuit") type.

The analog processing module APM1 has an input which substantially coincides with the input of the receiver RX1 and two outputs connected to the inputs of the analog-digital converters AD1-I and AD1-Q. The outputs of the two converters AD1-I and AD1-Q are then connected to the inputs of the digital processing module DPM1. The output of the module DPM1 substantially coincides with the output of the receiver RX1.

The receiver RX1 may comprise other devices, not shown in Figure 2, which will not be described below since they are not relevant for the purposes of the present invention.

The block diagram of the receiver RX2 of the second outdoor unit ODU2 is entirely similar to that of the receiver RX1. In particular, the receiver RX2 also comprises an analog processing module APM2, two analog-digital converters AD2-I, AD2-Q and a digital processing module DPM2, which in turn comprises a cancellation block CB2, a serializer S-2 and a deserializer D-2. The serializer S-1 of the receiver RX1 is preferably connected to the deserializer D-2 of the receiver RX2 and the deserializer D-1 of the receiver RX1 is preferably connected to the serializer S-2 of the receiver RX2. The connection between the serializers and the deserializers is performed by the cable C. If the cable C comprises more than 1 twisted pairs, the serializer S-1 is preferably connected to the deserializer D-2 by means of a first twisted pair TP1 and the deserializer D-1 is preferably connected to the serializer S-2 by means of a second twisted pair TP2, as shown in Figure 2.

The operating principle of the transceiving system RT will be described below.

In the operating condition, the first outdoor unit ODU1 and the second outdoor unit ODU2 receive respectively the abovementioned vertical radio signal V(t) and the horizontal radio signal H(t) via the antenna A and the respective connections RFL1 and RFL2.

Let us assume that the vertical radio signal V(t) and the horizontal radio signal H(t) are obtained by modulating a radio carrier at a frequency $f_{RF}$ in the microwave range, for example 15 GHz. The modulation used may be, for example, a digital quadrature amplitude modulation (QAM). Based on the above assumptions, the vertical and horizontal radio signals may be defined by means of the following equations:

$$V(t)=V_I(t)\cdot\cos(2\pi f_{RF}t)+ V_Q(t)\,\text{sen}(2\pi f_{RF}t) \qquad\qquad [1a]$$

$$H(t)=H_I(t)\cdot\cos(2\pi f_{RF}t)+ H_Q(t)\ \text{sen}(2\pi f_{RF}t) \hspace{2cm} [1b]$$

where $V_I(t)$ and $H_I(t)$ are in-phase components of the radio signals V(t) and H(t), respectively, while $V_Q(t)$ and $H_Q(t)$ are quadrature components of the radio signals V(t) and H(t), respectively. The components $V_I(t)$, $H_I(t)$, $V_Q(t)$ and $H_Q(t)$ are in baseband.

In the first outdoor unit ODU1, the vertical signal V(t) is received at the radio interface RFI1, which forwards it to the receiver RX1.

In the receiver RX1, the vertical radio signal V(t) is received by the analog processing module APM1. The analog processing module APM1 performs demodulation of the vertical radio signal V(t) so as to provide at its output the baseband components $V_I(t)$ and $V_Q(t)$ thereof. These components $V_I(t)$ and $V_Q(t)$ are analog signals.

The analog-digital converter AD1-I receives at its input the in-phase component $V_I(t)$ and samples it with a sampling frequency fc, thus obtaining a sequence of first samples DI-V. In a similar manner, the analog-digital converter AD1-Q receives at its input the quadrature component $V_Q(t)$ and samples it with the sampling frequency fc, thus obtaining a sequence of second samples DQ-V. For example, considering a radio channel with a maximum bandwidth of 56 MHz and a symbol frequency of the demodulator equal to 50 MHz, the sampling frequency (2 samples per symbol) fc is equal to 100 MHz.

Each sample DI-V, DQ-V comprises a string of N bits. In particular, the number N depends on the digital modulation used. If, for example, modulation of radio signals V(t), H(t) is the 1024-QAM modulation, N may be equal to 12. The N bits of each sample DI-V, DQ-V preferably comprise a number of bits which represent the amplitude of the sample and, optionally, other bits which take account of the dynamics of the components $V_I(t)$ and $V_Q(t)$ and the possible distortions of the samples obtained from them. For example, in the case of 1024-QAM modulation, the N=12 bits comprise 9 bits which represent the amplitude of the sample and 3 bits for management of the dynamics.

The analog-digital converter AD1-I then transmits the first samples DI-V to the digital processing module DPM1 in a parallel format. In particular, at each sampling period 1/fc, the analog-digital converter AD1-I transmits in parallel the N bits of a first sample DI-V to the module DPM1. Similarly, the analog-digital converter AD1-Q transmits the second samples DQ-V to the digital processing module DPM1 in a parallel format. In particular, at each sampling period 1/fc, the analog-digital converter AD1-Q transmits in parallel the N bits of a second sample DQ-V to the module DPM1.

At each sampling period 1/fc, the module DPM1 then receives in parallel the N bits of a first sample DI-V from the converter AD1-I and the N bits of a second sample DQ-V from the converter AD1-Q.

In the module DPM1, the cancellation block CB1 preferably selects, for each sample DI-V, DQ-V, a respective sample portion DI-V', DQ-V'. The sample portion DI-V', DQ-V' preferably comprises N' bits of the N bits of the sample DI-V, DQ-V, N' being an integer number less than or equal to N. Preferably, the N' bits comprise all or some of the bits which represent the amplitude of the sample and, optionally, one or more of the other bits which take into account the dynamics of the components $V_I(t)$ e $V_Q(t)$ and the possible distortions of the samples obtained from them. For example, in the case of 1024-QAM modulation, N' may be equal to 8 and may comprise 5 bits which represent the amplitude of the sample and 3 bits which take into account the dynamics and the possible distortions.

The cancellation block CB1 then preferably sends the sample portions DI-V', DQ-V' obtained to the serializer S-1. In particular, since each sample portion DI-V', DQ-V' comprises N' bits, at each sampling period 1/fc the cancellation block CB1 sends to the serializer S-1 2xN' bits in parallel B(1), ..., B(2xN'). If N'=8, the serializer S-1 then receives 16 bits in parallel at each sample period 1/fc.

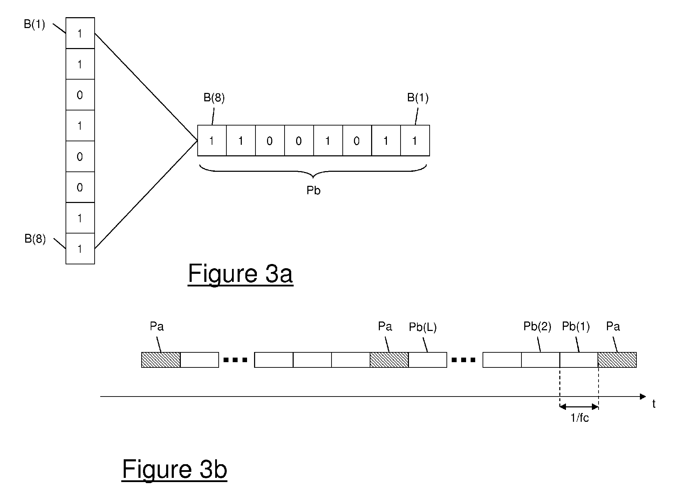

The serializer then preferably serializes the 2xN' bits B(1), ..., B(2xN') of the sample portions DI-V', DQ-V' so as to form a bit word Pb having a length of 2xN' bit. The serializer S-1 is therefore a 2xN':1 serializer. This operation is shown in schematic form in Figure 3a in which the case N'=4 is considered. In this case, the serializer S-1 is an 8:1 serializer which receives 8 bits in parallel B(1), ...., B(8) during each sampling period 1/fc. The serializer S-1 then arranges in series the bits B(1), ..., B(8) received so to form the bit word Pb, which therefore has a length of 8 bits. In the case of 1024-QAM modulation, the serializer S-1 is a 16:1 serializer which receives, during each sampling period 1/fc of the duration of 10 ns, 16 bits in parallel (8 bits corresponding to a sample portion DI-V' and 8 bits corresponding to a sample portion DQ-V') and therefore a bit word Pb comprising the same 16 bits arranged in series.

Then, the serializer S-1, during each sampling period 1/fc, transmits a bit word Pb along the cable C (in particular, along the twisted pair TP1) to the deserializer D-2 comprised in the receiver RX2. Therefore, the serializer S-1 transmits on the cable C (in particular, on the twisted pair TP1) a sequence of consecutive bit words Pb(1), Pb(2), ...., as shown in Figure 3b. As shown in Figure 3b, the serializer S-1 may periodically insert alignment words Pa in the sequence of bit words Pb(1), Pb(2), ... In particular, the serializer S-1 may transmit an alignment word Pa every L bit words Pb(1), ..., Pb(L), L being an integer number greater than 1. For example, L may be equal to 31250. The alignment word Pa preferably comprises a predefined bit sequence. Preferably, the alignment word Pa comprises an integer number of bytes greater than or equal to 1. For example, the alignment word Pa may comprise 2 bytes.

The bit words Pb(1), Pb(2), ... and the alignment words Pa thus form a first flow of cancellation data SCD-V which is transmitted serially by the serializer S-1 along the first twisted pair TP1 of the cable C. In the case of 1024-QAM modulation, if N'=8 and the sampling frequency fc is equal to 100 MHz, the transmission speed of the first flow of cancellation data SCD-V along the first twisted pair TP1 is equal to 1.6 Gb/s.

At the same time, in the first outdoor unit ODU2, the horizontal signal H(t) is received at the radio interface RF12, which forwards it to the receiver RX2. Operation of the receiver RX2 is similar to operation of the receiver RX1. Therefore, it will only be briefly be summarised hereinbelow.

In the receiver RX2, the horizontal radio signal H(t) is received by the analog processing module APM2 which demodulates it so as to provide at its output the baseband components $H_I(t)$ and $H_Q(t)$. These components $H_I(t)$ and $H_Q(t)$ are analog signals. Each analog-digital converter AD2-I, AD2-Q receives at its input the respective component $H_I(t)$, $H_Q(t)$ and samples it with the sampling frequency fc, thus obtaining a respective sequence of samples DI-H, DQ-H. Each sample DI-H, DQ-H comprises a string of N bits. The samples DI-H, DQ-H are then transmitted to the digital processing module DPM1 in a parallel format. In particular, at each sampling period 1/fc, the N bits of each sample DI-H, DQ-H are transmitted to the module DPM2. In the module DPM2, the cancellation block CB2 preferably selects, for each sample DI-H, DQ-H, a respective sample portion DI-H', DQ-H' which comprises N' bits. The cancellation block CB2 then preferably sends the sample portions DI-H', DQ-H' to the serializer S-2. At each sampling period 1/fc, the serializer S-2 preferably serializes the 2xN' bits of the sample portions DI-H', DQ-H' received so as to form a bit word having a length of 2xN' bits. Then, the serializer S-2, during each sampling period 1/fc, transmits a bit word along the cable C (in particular, along the twisted pair TP2) to the deserializer D-1 contained in the receiver RX1. The serializer S-2 may also periodically insert into the sequence of bit words alignment words Pa so as to form a second flow of cancellation data SCD-H which is transmitted serially by the serializer S-1 along the second twisted pair TP2 of the cable C.

The transmission of the second flow of cancellation data SCD-H along the second twisted pair TP2 preferably is asynchronous with respect to the transmission of the first flow of cancellation data SCD-V along the first twisted pair TP1.

With reference again to operation of the first receiver RX1, the deserializer D-1 receives the second flow of cancellation data SCD-H from the serializer S-2. The deserializer D-1 preferably deserializers this flow, namely arranges in parallel the 2xN' bits of each word so as to obtain the sample portions DI-H', DQ-H' in the original parallel format. This operation of the deserializer D-1 is therefore the reverse operation of that described above in relation to the serializer S-1. At each sample period 1/fc, the deserializer D-1 then preferably transmits in parallel to the cancellation block CB1 the N' bits of each sample portion DI-H', DQ-H'. Considering again, by way of example, the case of 1024-QAM modulation, the deserializer D-1 may also receive the second flow of cancellation data SCD-H on the second twisted pair TP2 of the cable C at a speed of 1.6 Gb/s. In this case, the second flow SCD-H comprises bit words which are 16 bits long. The deserializer D-1 is therefore a 1:16 deserializer which arranges in parallel the 16 bits of each bit word of the second flow SCD-H.

In the case where the second flow of cancellation data SCD-H comprises alignment words Pa, the deserializer D-1 preferably recognizes the alignment words Pa and uses them to align the flow of samples DI-V, DQ-V received from the converters AD1-I, AD1-Q with the flow of sample portions DI-H', DQ-H' received from the second receiver RX2 (namely in order to align the flow of samples relating to the vertical signal V(t) with the flow of samples relating to the horizontal signal H(t)).

The cancellation block CB1 then preferably receives the sample portions DI-H', DQ-H' and uses them to implement the XPIC technique. In particular, it uses the sample portions DI-H', DQ-H' in order to obtain a horizontal interference signal which is then extracted from the samples DI-V, DQ-V in order to cancel the cross-polar interference. The samples of the in-phase and quadrature components of the vertical signal DI-V, DQ-V thus processed are then combined so as to provide at the output of the cancellation block CB1 a vertical digital output signal V comprising M bits in parallel per sample, for a $2^M$-QAM modulation; For example, for a 1024-QAM modulation, the vertical output signal V comprises 10 bits per sample. The vertical digital output signal V indicates the bits originally transmitted by means of the vertical radio signal V(t) and is substantially devoid of the possible cross-polar interference.

Operation of the second receiver RX2 is preferably similar to that of the first receiver RX1. Therefore, it will only be briefly be summarised hereinbelow.

At the receiver RX2, the deserializer D-2 receives the first flow of cancellation data SCD-V from the serializer S-1. The deserializer D-2 preferably deserializes this flow, namely arranges in parallel the 2xN' bits of each word so as to obtain the sample portions DI-V', DQ-V' in the original parallel format. At each sample period 1/fc, the deserializer D-2 then preferably transmits in parallel to the cancellation block CB2 the N' bits of each sample portion DI-V', DQ-V'. The deserializer D-2 also preferably recognizes and processes the alignment words Pa included in the flow SCD-V in order to align the flow of samples DI-H, DQ-H received from the converters AD2-I, AD2-Q with the flow of sample portions DI-V', DQ-V' received from the first receiver RX1. The cancellation block CB2 then preferably receives the sample portions DI-V', DQ-V' and uses them to implement the XPIC technique, thus providing at its output a horizontal, digital, output signal H comprising M bits in parallel per sample, for $2^M$-QAM modulation. For example, for a 1024-QAM modulation, the horizontal output signal H comprises 10 bits per sample. The horizontal digital output signal H indicates the bits originally transmitted by means of the horizontal radio signal H(t) and is substantially devoid of the possible cross-polar interference.

The digital signals V and H supplied by the digital processing modules DPM1, DPM2 may be forwarded to further possible modules (not shown in the Figures) included in the receivers RX1, RX2. These modules may for example format the signals V and H in Ethernet frames and then send the Ethernet frames to the data interface DI2, DI2 of the respective outdoor units ODU1, ODU2.

Advantageously, the connection between the first outdoor unit ODU1 and the second outdoor unit ODU2 for the exchange of the bit flows useful for cancellation of the cross-polar interference is performed in a simple and low-cost manner. In fact, since the serializers of the receivers present in the outdoor units perform serialization of the digital signals in parallel generated in the receivers themselves, the connection between the two outdoor units ODU1, ODU2 is a serial connection and not a parallel connection which would require the laying of a number of cables in parallel and is therefore more complicated to implement, also in terms of hardware modules inside the receiver. According to the present invention, the connection may instead advantageously be performed using a standard Ethernet cable, which can be easily found on the market.

Moreover, advantageously, in the case where the serial bit flows are asynchronous (for example, in the case of packet data transmitted on the radio link), the transmitting serializers of the two receivers must not transmit any clock signal. This results in a greater implementational simplicity of the receiver. In other words, advantageously, the two outdoor units ODU1, ODU2 may each operate with their own local clock and this allows a greater simplicity and flexibility, since typically the remote sources of the packet data transmitted on the radio link using the vertical polarization and the horizontal polarization are asynchronous.

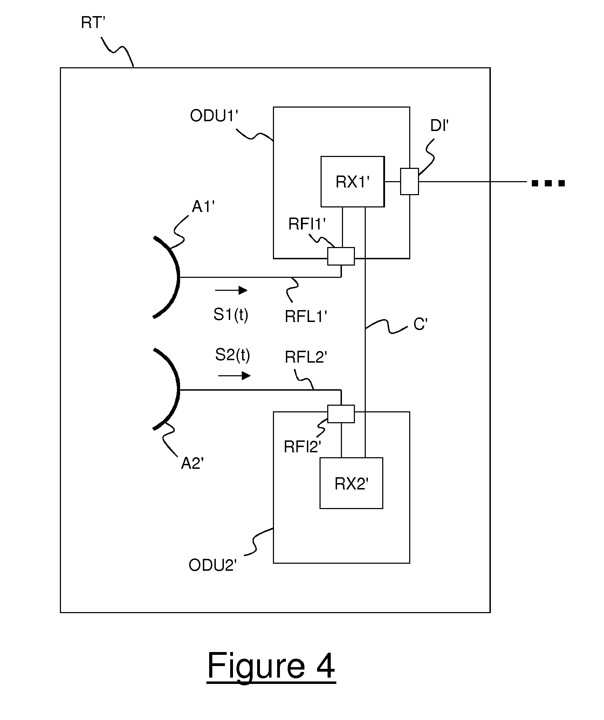

Figure 4 shows a block diagram of a radio transceiving system RT' of a radio communication network according to a second embodiment of the present invention. According to this second embodiment, the transceiving system RT' is configured to receive two radio signals and to combine the two signals according to the known technique of "spatial diversity", as will be explained in greater detail hereinbelow. This technique is typically used to reduce the effects of attenuation by multiple paths on the radio signal transmitted.

The transceiving system RT' preferably comprises a first antenna A1', a second antenna A2', a first outdoor unit ODU1' and a second outdoor unit ODU2'.

The first outdoor unit ODU1 preferably comprises a radio interface RFI1', a receiver RX1' and a data interface DI'. Similarly, the second outdoor unit ODU2' comprises a radio interface RFI2', a receiver RX2' and a data interface DI2'. Both the first outdoor unit ODU1' and the second outdoor unit ODU2' comprise further modules and devices, not shown in the Figure, which will not be described below since they are not relevant for the purposes of the present invention.

The first outdoor unit ODU1' is connected to the first antenna A1' by means of a first connection RFL1', while the second outdoor unit ODU2' is connected to the second antenna A2' by means of a second connection RFL2'. Preferably, the first connection RFL1' and the second connection RFL2' comprise waveguides. The first antenna A1' and the second antenna A2' are preferably located at a mutual distance of a few metres. Typically this mutual distance is between 2 m and 10 m, and is such as to decorrelate temporally (owing to the different physical path) the signals received from the two antennas in a proportionally inverse manner with respect to the radio carrier used in the connection. The technique of "spatial diversity" has proved to be very useful in the case of radio connections which are affected by interference due to the so-called "multiple paths", i.e. with frequencies of the radio carrier ranging between 5 GHz and 10 GHz. If performed with a phase combiner (for example of the digital type) for the received signals, the spatial diversity technique also provides the advantage of an increase of 3 dB in the gain of the connection system, independently of the frequency of the radio carrier.

The receiver RX1' of the first outdoor unit ODU1' and the receiver RX2' of the second outdoor unit ODU2' are connected together by means of a cable C'. The first outdoor unit ODU1' and the second outdoor unit ODU2' are preferably located at a mutual distance of between 2 m and 10 m. The length of the cable C' is therefore preferably between 2 m and 10 m.

According to a preferred embodiment of the present invention, the cable C' is a copper twisted pair cable comprising a number of twisted pairs higher than 1. Preferably, the cable C' comprises a number of twisted pairs equal to 4. More preferably, the cable C' is an Ethernet cable of category CAT 6 or CAT 6a.

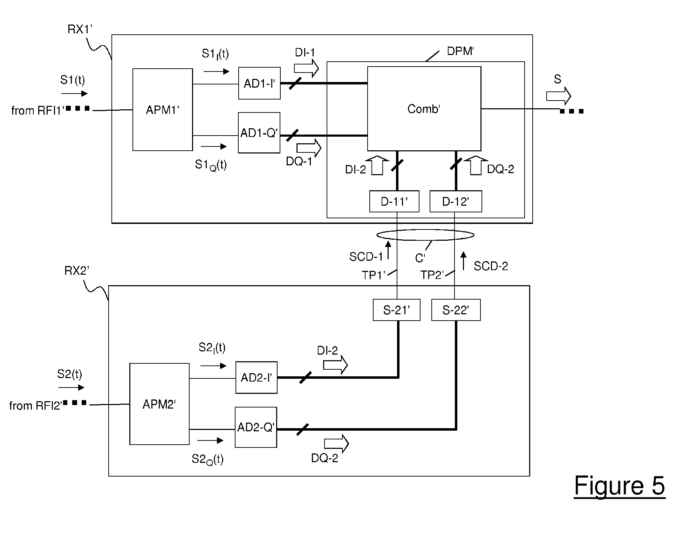

Figure 5 shows a block diagram, in greater detail, of the receivers RX1', RX2'. The receiver RX1' comprises an analog processing module APM1', two analog-digital converters AD1-I', AD1-Q' and a digital processing module DPM'.

In turn, the digital processing module DPM' comprises a cancellation block Comb', a first serializer D-11' and a second deserializer D-12'. The cancellation block Comb' has two inputs which substantially coincide with the inputs of the module DPM' and an output which substantially coincides with the output of the module DPM'. The cancellation block Comb' has a further first input connected to the first serializer D-11' and a further second input connected to the second deserializer D-12'. Preferably, the digital processing module DPM' is an integrated component of the FPGA or ASIC type.

The analog processing module APM1' has an input which substantially coincides with the input of the receiver RX1' and two outputs connected to the inputs of the analog-digital converters AD1-I' and AD1-Q'. The outputs of the two converters AD1-I' and AD1-Q' are then connected to the inputs of the digital processing module DPM'. The output of the module DPM' substantially coincides with the output of the receiver RX1'.

The receiver RX1' may comprise other devices, not shown in Figure 5, which will not be described below since they are not relevant for the purposes of the present invention.

The receiver RX2' comprises an analog processing module APM2', two analog-digital converters AD2-I', AD2-Q', a first serializer S-21' and a second serializer S-22'.

The analog processing module APM2' has an input which substantially coincides with the input of the receiver RX2' and two outputs connected to the inputs of the analog-digital converters AD2-I'; and AD2-Q'. The outputs of the two converters AD2-I' and AD2-Q' are then connected to the inputs of the first serializer S-21' and the second serializer S-22', respectively.

The receiver RX2' may also comprise other devices, not shown in Figure 5, which will not be described below since they are not relevant for the purposes of the present invention.

The first serializer S-21' of the receiver RX2' is preferably connected to the first deserializer D-12' of the receiver RX1' and the second serializer S-22' of the receiver RX2' is preferably connected to the second deserializer D-12' of the receiver RX1'. The connection between the serializers and the deserializers is performed by the cable C'. If the cable C comprises several twisted pairs, the first serializer S-21' is preferably connected to the first deserializer D-12' by means of a first twisted pair TP1' and the second serializer S-22' is preferably connected to the second deserializer D-12' by means of a second twisted pair TP2', as shown in Figure 5.

The operating principle of the transceiving system RT' will be described below.

In the operating condition, the first outdoor unit ODU1' and the second outdoor unit ODU2' receive respectively the first radio signal S1(t) and the second radio signal S2(t).

These radio signals may be defined by means of the following equations:

$$S1(t)=S1_I(t)\cdot\cos(2\pi f_{RF}t)+ S1_Q(t)\,\text{sen}(2\pi f_{RF}t) \qquad [2a]$$

$$S2(t)=S2_I(t)\cdot\cos(2\pi f_{RF}t)+ S2_Q(t)\,\text{sen}(2\pi f_{RF}t) \qquad [2b]$$

wherein $S1_I(t)$ and $S2_I(t)$ are in-phase components of the radio signals S1(t) and S2(t), respectively, while $S1_Q(t)$ and $S2_Q(t)$ are quadrature components of the radio signals S1 (t) and S2(t), respectively. The components $S1_I(t)$, $S2_I(t)$, $S1_Q(t)$ and $S2_Q(t)$ are in baseband.

In the first outdoor unit ODU1', the signal S1(t) is received at the radio interface RFI1', which forwards it to the receiver RX1'.

In the receiver RX1', the radio signal S1(t) is received by the analog processing module APM1'. The analog processing module APM1' performs demodulation of the first radio signal S1(t) so as to provide at its output the baseband components $S1_I(t)$ and $S1_Q(t)$ thereof.

The analog-digital converter AD1-I' receives at its input the in-phase component $S1_I(t)$ and samples it with a sampling frequency fc, for example of 100 MHz, thus obtaining a sequence of first samples DI-1. In a similar manner, the analog-digital converter AD1-Q' receives at its input the quadrature component $S1_Q(t)$ and samples it with the sampling frequency fc, thus obtaining a sequence of second samples DQ-1.

Each sample DI-1, DQ-1 comprises a string of N bits. In particular, the number N depends on the digital modulation used, in a similar manner to that described above. If, for example, modulation of radio signals S1 (t), S2(t) is the 1024-QAM modulation, N may be equal to 12.

The analog-digital converter AD1-I' then transmits the first samples DI-1 to the digital processing module DPM' in a parallel format. In particular, at each sampling period 1/fc, the analog-digital converter AD1-I' transmits in parallel the N bits of a sample DI-1 to the module DPM1'. Similarly, the analog-digital converter AD1-Q' transmits the second samples DQ-1 to the digital processing module DPM' in a parallel format. In particular, at each sampling period 1/fc, the analog-digital converter AD1-Q' transmits in parallel the N bits of a sample DQ-1 to the module DPM'.

At the same time, in the receiver RX2', the radio signal S2(t) is received by the analog processing module APM2' which demodulates it so as to provide at its output the baseband components $S2_I(t)$ and $S2_Q(t)$ of the signal. The analog-digital converter AD1-I' receives at its input the in-phase component $S2_I(t)$ and samples it with the sampling frequency fc, thus obtaining a sequence of third samples DI-2. In a similar manner, the analog-digital converter AD1-Q' receives at its input the quadrature component $S1_Q(t)$ and samples it with the sampling frequency fc, thus obtaining a sequence of fourth samples DQ-2. Each sample DI-2, DQ-2 comprises a string of N bits.

The analog-digital converter AD2-I' then transmits the third samples DI-2 to the first serializer S-21' in a parallel format. In particular, at each sampling period 1/fc, the analog-digital converter AD2-I' transmits in parallel the N bits of a sample DI-2 to the first serializer S-21'. Similarly, the analog-digital converter AD2-Q' transmits the fourth samples DQ-2 to the second serializer S-22' in a parallel format. In particular, at each sampling period 1/fc, the analog-digital converter AD2-Q' transmits in parallel the N bits of a sample DQ-2 to the second serializer S-22'. In the case of 1024-QAM modulation (N=12), the first serializer S-21' and the second serializer S-22' each receive 12 bits in parallel at each sampling period 1/fc.

The first serializer S-21' and the second serializer S-22' then preferably serialize the N bits of the samples DI-2, DQ-2, respectively, in order to form respective bit words. In the case of 1024-QAM modulation, both the first serializer S-21' and the second serializer S-22' may be 16:1 serializers. In this case, 4 filling bits are added to the N=12 bits of the samples DI-2, DQ-2 in order to form bit words with a length equal to 16.

Then, the first serializer S-21, during each sampling period 1/fc, transmits a bit word along the cable C' (in particular, along the first twisted pair TP1') to the first deserializer D-11' contained in the receiver RX1'. Similarly, the second serializer S-21', during each sampling period 1/fc, transmits a bit word along the cable C' (in particular, along the second twisted pair TP2') to the second deserializer D-12' contained in the receiver RX1'.

In a similar manner to the first embodiment, both the first serializer S-21' and the second serializer S-22' may periodically insert in the sequence of bit words alignment words, for example an alignment word every 31250 bit words. The bit words and the alignment words thus form a first flow of cancellation data SCD-1 and a second flow of cancellation data SCD-2 which are transmitted serially respectively from the serializer S-21' and the serializer S-22' along the first twisted pair TP1' and the second twisted pair TP2' of the cable C'.

In the case of 1024-QAM modulation, if the sampling frequency fc is equal to 100 MHz, the speed of transmission of the data along the first twisted pair TP1' and along the second twisted pair TP2' is equal to 1.6 Gb/s.

The transmission of the flow SCD-2 along the second twisted pair TP2' preferably is asynchronous with respect to the transmission of the flow SCD-1 along the first twisted pair TP1'.

With reference again to operation of the first receiver RX1', the first deserializer D-11' receives the first flow of cancellation data SCD-1 transmitted from the first serializer S-21' and preferably deserializes this data flow, namely arranges in parallel the N bits of each bit word so as to obtain the third samples DI-2 in the original parallel format. Similarly, the second deserializer D-12' receives the second flow of cancellation data SCD-2 transmitted from the second serializer S-22' and preferably deserializes this data flow, namely arranges in parallel the N bits of each bit word so as to obtain the fourth samples DQ-2 in the original parallel format.

At each sampling period 1/fc, the first deserializer D-11' and the second deserializer D-12' then preferably transmit in parallel to the combination block Comb' the N bits of each third sample DI-2 and of each fourth sample DQ-2, respectively.

In the case where the flows SCD1-1, SCD-2 comprise the alignment words, both the first and the second deserializer D-11', D-12' preferably recognize the alignment words and use them to align the flow of samples DI-1, DQ-1 received from the converters AD1-I', AD1-Q' with the flow of samples DI-2, DQ-2 received from the second receiver RX2' (namely to align the flow of samples of the first signal S1 (t) with the flow of samples of the second signal S2(t)).

The combination block Comb' then preferably receives the third and the fourth samples DI-2, DQ-2 and uses them to implement the technique of spatial diversity. In particular, it combines the first and second samples DI-1, DQ-1 with the third and fourth samples DI-2, DQ-2, respectively, so as to obtain a digital signal S which is substantially not affected by attenuation caused by multiple paths.

The digital signal S supplied by the digital processing module DPM' may be forwarded to further possible modules (not shown in the Figures) present inside the receiver RX1'. These modules may for example format the signal S in Ethernet frames and then send the Ethernet frames to the data interface DI'.

Advantageously, also in accordance with this second embodiment, the connection between the first outdoor unit ODU1' and the second outdoor unit ODU2' for the exchange of the bit flows useful for cancellation of the attenuation resulting from multiple paths is performed in a simple and low-cost manner. In fact, since the serializers of the receivers present in the outdoor units perform serialization of the digital signals in parallel generated in the receivers themselves, the connection between the two outdoor units ODU1', ODU2' is a serial connection and not a parallel connection which would require the laying of a number of cables in parallel and would therefore be more complicated to implement, also in terms of hardware modules inside the receiver. According to the present invention, the connection may instead advantageously be performed using a standard Ethernet cable, which can be easily found on the market.

The connection between the two outdoor units described above with reference to the first and second embodiments considered may be advantageously performed also in radio transceiving systems having applications different from those described for cancelling interference from cross polarization (in a synchronous and asynchronous configuration) and with spatial diversity. In particular, for example, the connection described may advantageously be performed for the exchange of data between modems operating with adaptive modulation, for data exchange in systems which implement traffic balancing techniques and in MIMO ("Multiple Input/Multiple Output") systems.

**Claims**

1. A radio transceiving system (RT, RT') for a node of a radio communication network comprising a first outdoor unit (ODU1, ODU2'), a second outdoor unit (ODU2, ODU1') and a cable (C, C') connecting said first outdoor unit (ODU1, ODU2') and said second outdoor unit (ODU2, ODU1'), wherein:

   - said first outdoor unit (ODU1, ODU2') comprises a serializer (S-1; S-21') adapted to process information (DI-V, DQ-V; DI-2) in a parallel format, so as to generate a serial data flow (SCD-V; SCD-1), and to transmit said serial data flow (SCD-V; SCD-1) to said second outdoor unit (ODU2, ODU1') via said cable (C, C'); and
   - said second outdoor unit (ODU2, ODU1') comprises a deserializer (D-2; D-11') adapted to receive said serial data flow (SCD-V; SCD-1) from said first outdoor unit (ODU1, ODU2') via said cable (C, C') and to process said serial data flow (SCD-V; SCD-1) so as to recover said information (DI-V, DQ-V; DI-2) in said parallel format.

2. The radio transceiving system (RT, RT') according to claim 1, wherein said cable (C, C') is a copper twisted pair cable comprising a number of twisted pairs higher than 1.

3. The radio transceiving system (RT, RT') according to claim 2, wherein said cable (C, C') is an Ethernet cable of category CAT 6 or CAT 6a.

4. The radio transceiving system (RT, RT') according to any one of the preceding claims, wherein said serial data flow (SCD-V; SCD-1) comprises at least one alignment word (Pa).

5. The radio transceiving system (RT, RT') according to any one of the preceding claims, wherein:

   - said first outdoor unit (ODU1, ODU2') is configured to receive a first radio signal (V(t), S2(t)) and to generate said information (DI-V, DQ-V; DI-2) in said parallel format, said information (DI-V, DQ-V; DI-2) being indicative of said first radio signal (V(t), S2(t)); and
   - said second outdoor unit (ODU2, ODU1') is configured to receive a second radio signal (H(t), S1 (t)) and to process said second radio signal (H(t), S1(t)) on the basis of said information (DI-V, DQ-V; DI-2) recovered in said parallel format.

6. The radio transceiving system (RT) according to claim 5, wherein said second outdoor unit (ODU2) is configured to generate further information (DI-H, DQ-H) indicative of said second radio signal (H(t)), said further information (DI-H, DQ-H) being in said parallel format, said second outdoor unit (ODU2) comprising a further serializer (S-2) adapted to process said further information (DI-H, DQ-H), so as to generate a further serial data flow (SCD-H), and to transmit said further serial data flow (SCD-H) to said first outdoor unit (ODU1) via said cable (C).

7. The radio transceiving system (RT) according to claim 6, wherein said serial data flow (SCD-V) and said further serial data flow (SCD-H) are asynchronous.

8. The radio transceiving system (RT) according to any one of the preceding claims, wherein said first outdoor unit (ODU1) and said second outdoor unit (ODU2) are located at a mutual distance of between 0.5 m and 2 m, said first outdoor unit (ODU1) and said second outdoor unit (ODU2) being connected to a same dual polarized antenna.

9. The radio transceiving system (RT') according to any one of claims 1 to 5, wherein said first outdoor unit (ODU2') and said second outdoor unit (ODU1') are located at a mutual distance of between 2 m and 10 m, each of said first outdoor unit (ODU2') and said second outdoor unit (ODU1') being connected to a respective single polarized or dual polarized antenna.

<u>Figure 1</u>

Figure 2

B(1)

| 1 |
| 1 |
| 0 |
| 1 |
| 0 |
| 0 |
| 1 |

B(8) | 1 |

B(8)                    B(1)

| 1 | 1 | 0 | 0 | 1 | 0 | 1 | 1 |

Pb

## Figure 3a

Pa                          Pa    Pb(L)        Pb(2) Pb(1) Pa

1/fc

t

## Figure 3b

RT'

ODU1'

DI'

RX1'

A1'

RFI1'

S1(t)

RFL1'

S2(t)    RFL2'

C'

RFI2'

A2'

RX2'

ODU2'

# Figure 4

Figure 5

Europäisches
Patentamt

European
Patent Office

Office européen
des brevets

# EUROPEAN SEARCH REPORT

Application Number

EP 12 19 1537

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 827 036 A1 (HUAWEI TECH CO LTD [CN]) 29 August 2007 (2007-08-29) * abstract * * figures 2,4,5 * * paragraphs [0002], [0032], [0036] - [0040] * ----- | 1-9 | INV. H04W88/08 H04B7/00 |
| A | "CPRI Specification V5.0 - Common Public Radio Interface (CPRI); Interface Specification", , 21 September 2011 (2011-09-21), XP055033500, Retrieved from the Internet: URL:http://www.cpri.info/downloads/CPRI_v_5_0_2011-09-21.pdf [retrieved on 2012-07-20] * the whole document * ----- | 1-9 | |

TECHNICAL FIELDS
SEARCHED (IPC)

H04B
H04L
H04W

The present search report has been drawn up for all claims

| Place of search | Date of completion of the search | Examiner |
|---|---|---|
| The Hague | 30 November 2012 | Borges, Pedro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 19 1537

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2012

| Patent document cited in search report | Publication date | Patent family member(s) | Publication date |
|---|---|---|---|
| EP 1827036 A1 | 29-08-2007 | AT 464710 T | 15-04-2010 |
| | | CN 1845621 A | 11-10-2006 |
| | | EP 1827036 A1 | 29-08-2007 |
| | | HK 1106649 A1 | 13-08-2010 |
| | | JP 4588038 B2 | 24-11-2010 |
| | | JP 2007228579 A | 06-09-2007 |

EPO FORM P0459

For more details about this annex : see Official Journal of the European Patent Office, No. 12/82